# EUROPEAN PATENT SPECIFICATION

(11) **EP 1 682 247 B1**
(45) Date of publication and mention of the grant of the patent: **18.02.2009**
(21) Application number: 04822160.0
(22) Date of filing: 07.07.2004
(51) Int. Cl.: B01D 39/16

(54) **ATMOSPHERIC PLASMA TREATMENT OF MELTBLOWN FIBERS USED IN FILTRATION**
ATMOSPHÄRISCHE PLASMABEHANDLUNG VON MELTBLOWN-FASERN, DIE BEI DER FILTRATION VERWENDET WERDEN
TRAITEMENT PLASMA ATMOSPHERIQUE DE FIBRES OBTENUES PAR FUSION-SOUFFLAGE UTILISE POUR LE FILTRAGE

(30) Priority: 11.07.2003 US 486197
(43) Date of publication of application: 26.07.2006
(73) Proprietor: LYDALL, INC., Manchester, CT 06040 (US)
(72) Inventor: SANDERS, Robert, G., Rochester, NH 03867 (US)
(74) Representative: Brookhuis, Hendrik Jan Arnold
(86) International application number: PCT/US2004/021648
(87) International publication number: WO 2006/011887

(56) References cited:
- WO-A-00/01737
- WO-A-00/01737
- WO-A-01/07144
- US-B1- 6 419 871

## Description

### BACKGROUND OF THE INVENTION

### FIELD OF THE INVENTION

The instant invention relates to a method of making a fibrous filter media comprising a web of thermoplastic fibers, wherein said thermoplastic fibers have been surface modified with a gaseous plasma at atmospheric conditions.

### DESCRIPTION OF RELATED ART

The filtration properties of nonwoven polymeric fibrous webs can be improved by transforming the web into an electret, i.e., a dielectric material exhibiting a quasi-permanent electrical charge. The electrostatic charge provides for increased filter efficiency against a variety of substances, especially charged particulates such as dust. Electrets are effective in enhancing particle capture in aerosol filters. Electrets are useful in a variety of devices including, e.g., air filters, face masks, and respirators, and as electrostatic elements in electro-acoustic devices such as microphones, headphones, and electrostatic recorders. Charged filters are commonly used today in household heating and air conditioning filters, in vacuum bags, and for other uses.

Filtration webs can be formed by a variety of methods. For example, a thin film or monolayer of polymer material can be extruded and charged via corona discharge. The charged film is then fibrillated and the resulting fibrils formed into a non-woven web via needle punching or other known means. In another method, a polymer is melt blown as a fine fiber and then fashioned into a non-woven web. The fibers are charged either as they exit the orifice of the extruder during melt blowing or after they are assembled into a web. Charging can be carried out by corona exposure, ion bombardment, etc. Electrets are currently produced by a variety of methods including direct current ("DC") corona charging (see, e.g., U.S. Pat. Re. 30,782 (van Turnhout)), and hydrocharging (see, e.g., U.S. Pat. No. 5,496,507 (Angadjivand et al.)), and can be improved by incorporating fluorochemicals into the melt used to produce the fibers of some electrets (see, e.g., U.S. Pat. No. 5,025,052 (Crater et al.)).

Many of the particles and contaminants with which electret filters come into contact interfere with the filtering capabilities of the webs. Liquid aerosols, for example, particularly oily aerosols, tend to cause electret filters to lose their electret enhanced filtering efficiency (see, e.g., U.S. Pat. No. 5,411,576 (Jones et al.)).

Numerous methods have been developed to compensate for loss of filtering efficiency. One method includes increasing the amount of the nonwoven polymeric web in the electret filter by adding layers of webs or increasing the thickness of the electret filter. The additional web, however, increases the breathing resistance of the electret filter, adds weight and bulk to the electret filter, and increases the cost of the electret filter. Another method for improving an electret filter's resistance to oily aerosols includes forming the electret filter from resins that include melt processable fluorochemical additives such as fluorochemical oxazolidinones, fluorochemical piperazines, and perfluorinated alkanes. (See, e.g., U.S. Pat. No. 5,025,052 (Crater et al.)). The fluorochemicals should be melt processable, i.e., suffer substantially no degradation under the melt processing conditions used to form the microfibers that are used in the fibrous webs of some electrets. (See, e.g., WO 97/07272 (Minnesota Mining and Manufacturing)). U.S. Pat. No. 6,419,871 (Ogale) discloses an electrostatic filter medium comprising a web of electret fibers which have been treated with fluorine-containing plasmas to produce fibers that are electrostatically charged. The fibers in U.S. Pat. No. 6,419,871 are subsequently rinsed and dried. However, U.S. Pat. No. 6,419,871 suffers from the drawbacks of having to use a chamber at reduced pressure wherein the pressure used is on the order of 1,33 to 133 Pascals. Because the plasma treatment is performed at reduced pressure (also called vacuum plasma treatment), one is limited by the size of the chamber that can be used.

The inventor of the instant invention has found that he is able to address some of these drawbacks. Thus, the instant invention discloses improvements that further enhance the filtration properties of polymeric fibrous webs and electrolets.

### BRIEF DESCRIPTION OF THE SEVERAL VIEWS OF THE DRAWINGS

The present invention will become more fully understood from the detailed description given hereinbelow and the accompanying drawings which are given by way of illustration only, and thus are not limitative of the present invention, and wherein:

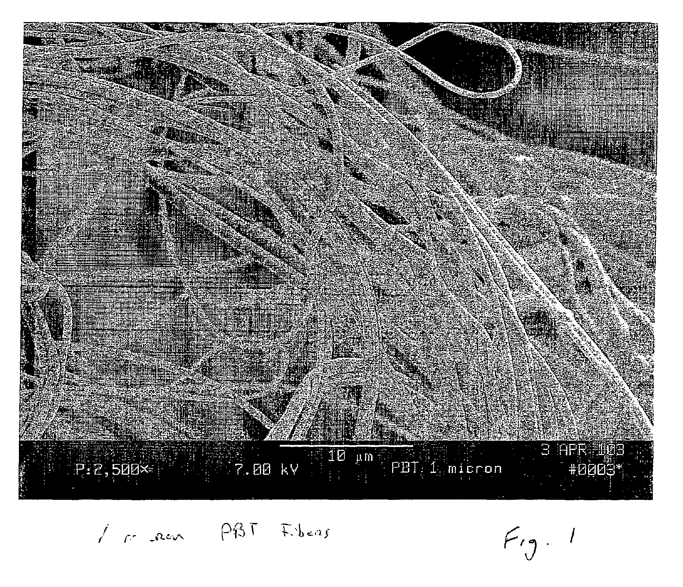

Figure 1 is a 2500 fold magnification of 1 micron poly(butylene-terephthalate) fibers;

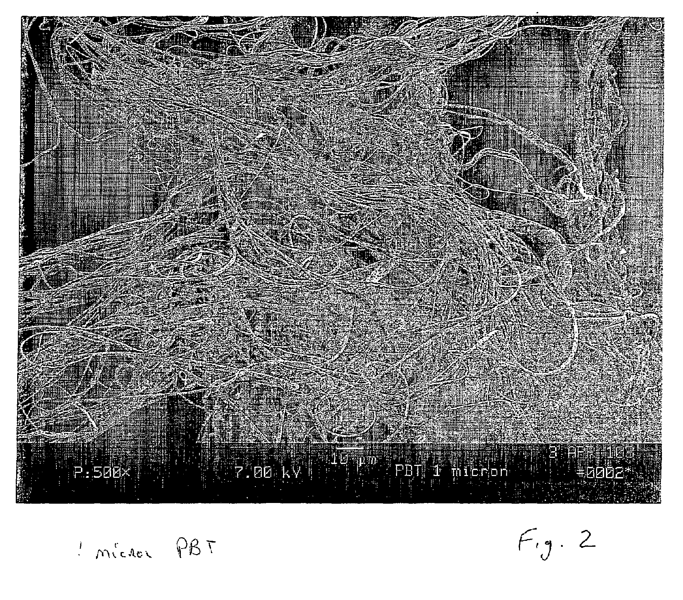

Figure 2 is a 500 fold magnification of 1 micron poly(butylene-terephthalate) fibers;

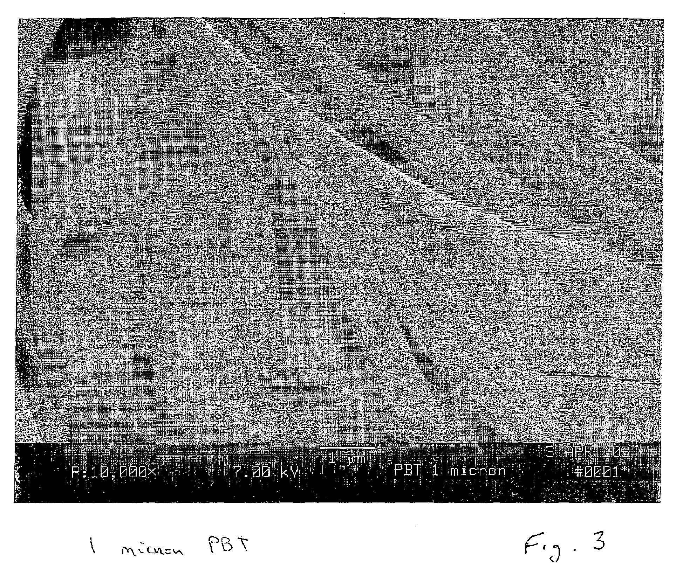

Figure 3 is a 10,000 fold magnification of 1 micron poly(butylene-terephthalate) fibers;

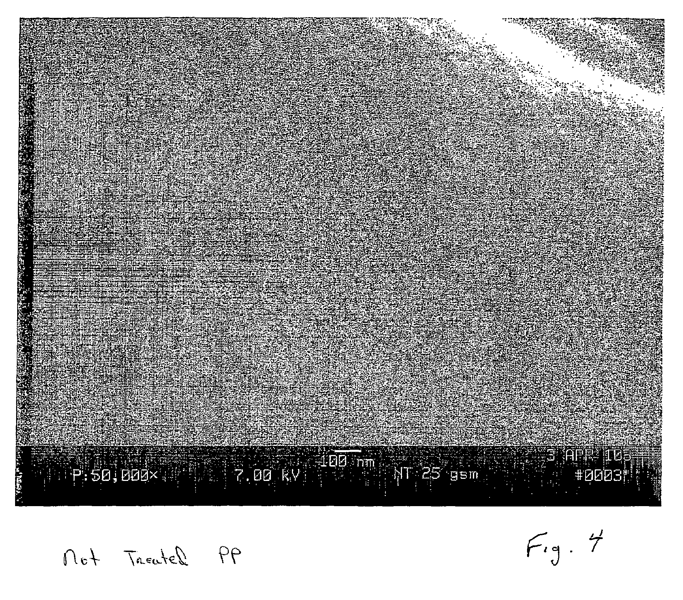

Figure 4 is a 50,000 fold magnification of untreated polypropylene fibers;

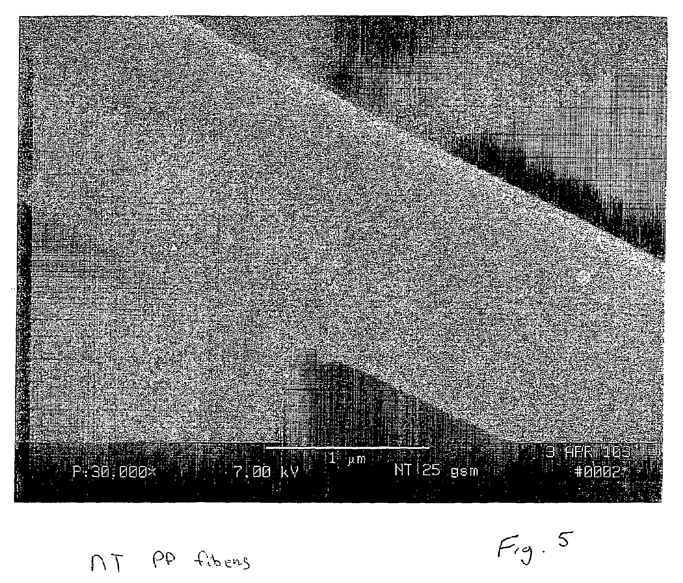

Figure 5 is a 30,000 fold magnification of untreated polypropylene fibers;

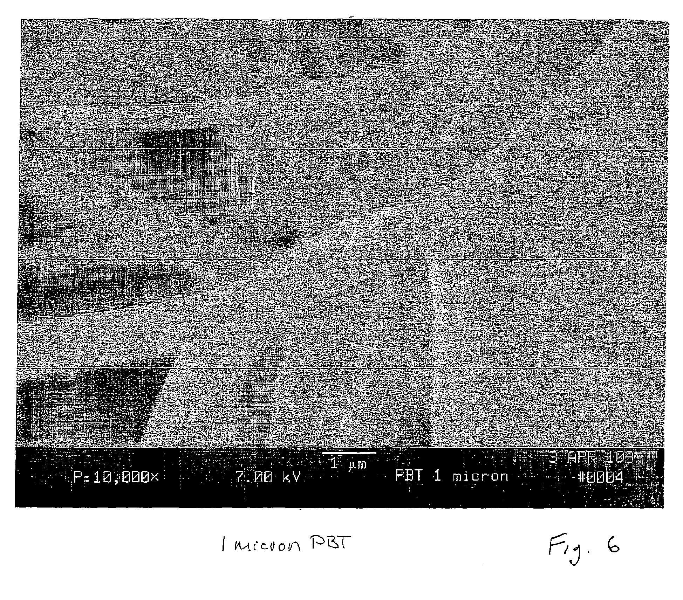

Figure 6 is a 10,000 fold magnification of 1 micron poly(butylene-terephthalate) fibers;

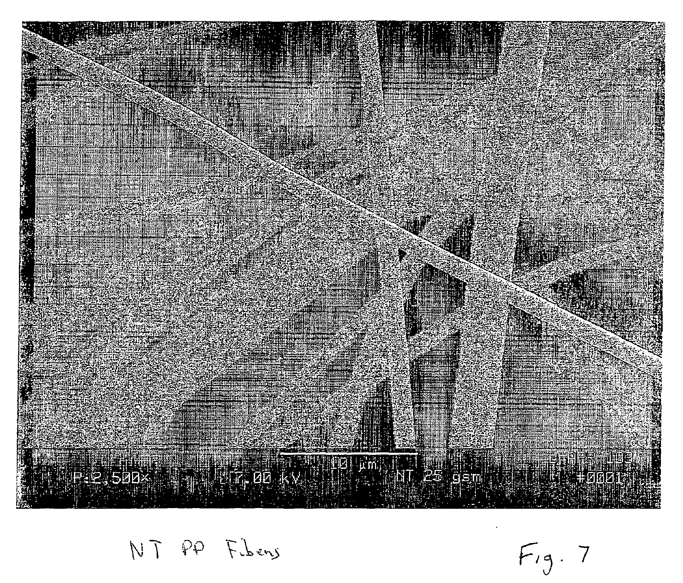

Figure 7 is a 2,500 fold magnification of untreated polypropylene fibers;

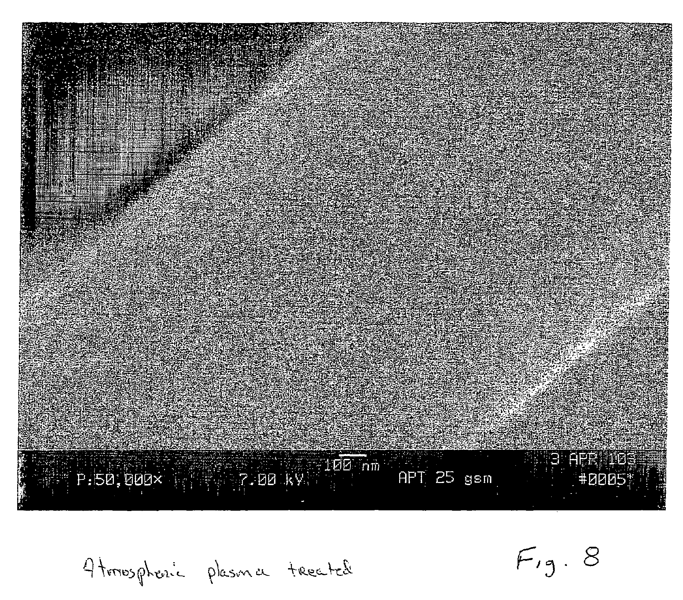

Figure 8 is a 50,000 fold magnification of atmospheric plasma treated fibers;

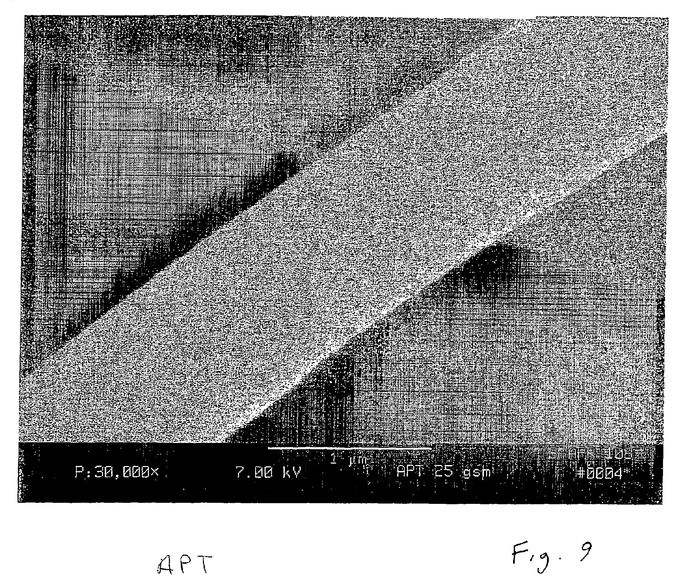

Figure 9 is a 30,000 fold magnification of atmospheric plasma treated fibers;

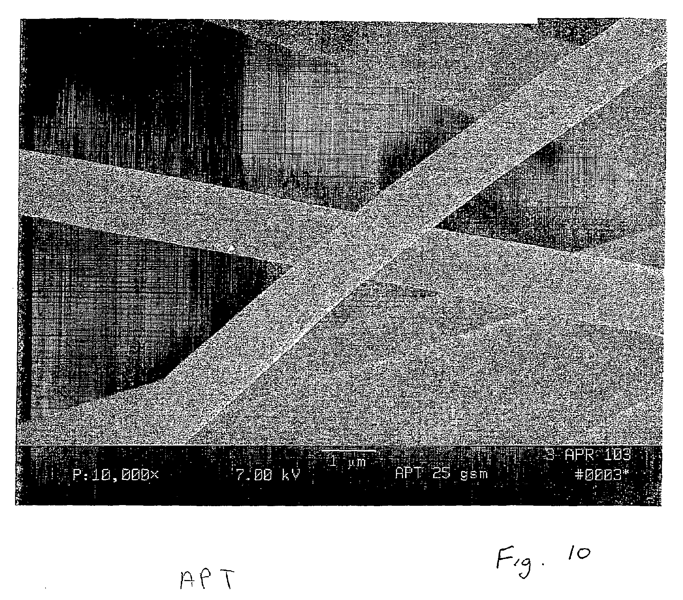

Figure 10 is a 10,000 fold magnification of atmospheric plasma treated fibers;

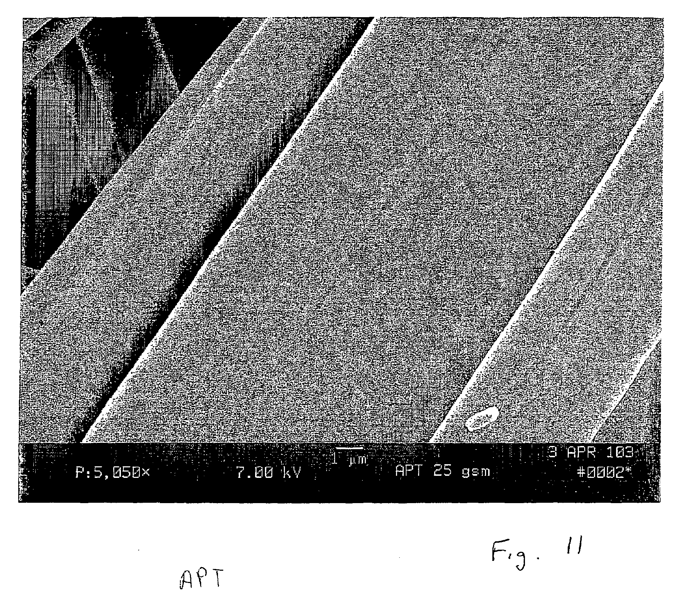

Figure 11 is a 5,050 fold magnification of atmospheric plasma treated fibers;

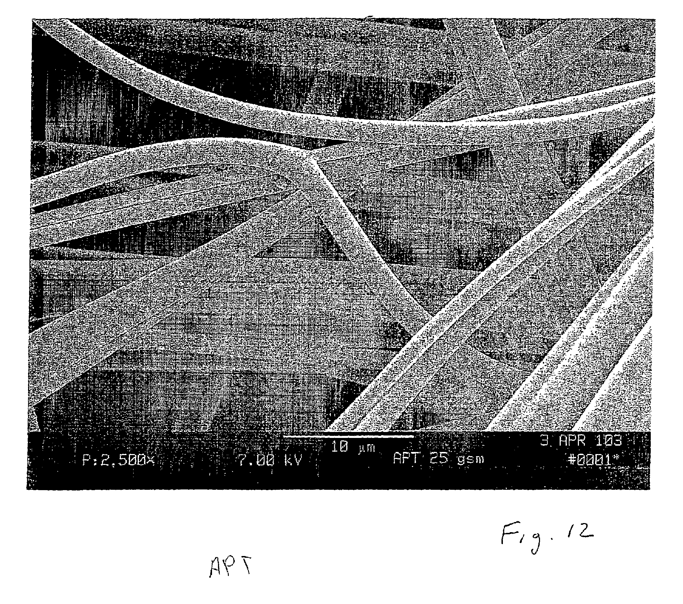

Figure 12 is a 2,500 fold magnification of atmospheric plasma treated fibers; and

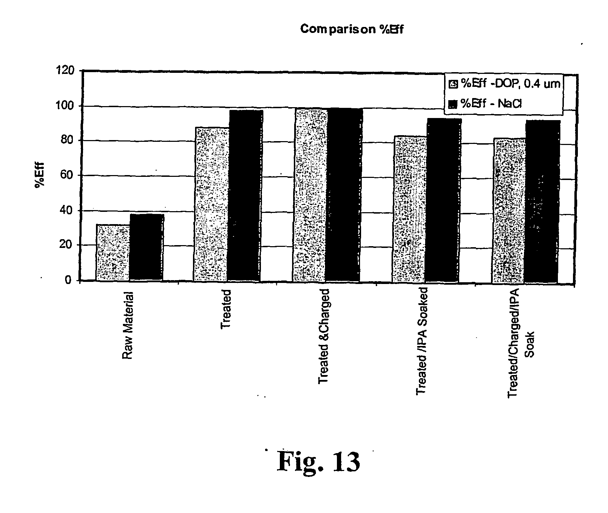

Figure 13 provides a comparison of the % Efficiency between the raw material, plasma treated material, plasma treated material that is also charged, plasma treated material that has been soaked in isopropyl alcohol, and plasma treated material that is charged and also soaked in isopropyl alcohol.

### DETAILED DESCRIPTION OF THE INVENTION

The present inventor has found that by modifying the surface of microfibers by surface treatment with an atmospheric plasma process, improved filtration occurs. Moreover, the use of atmospheric plasma conditions means that a reduced pressure chamber is not required for plasma treatment leading to decreased costs and the ability to treat greater amounts of microfibers. Atmospheric plasma treatment has an advantage over corona treated surfaces in that atmospheric plasma treated surfaces hold their treatment longer. The atmospheric plasma treating process also allows the treatment of microfibers without being restricted by both the size of chambers and the reduced pressure needed in reduced pressure plasma treatment equipment.

Atmospheric plasma treatment of microfibers likely leads to improved filtration ability due to one or more of the following: etching the surface, the cleaning of the surface, deposition of chemicals, oxidation or reduction of the surface, or the efficient formation of free radicals on the surface generating the possibility of intermolecular cross-linking (carbonization).

In the etching process, it is likely that the etching exposes internally melted additives such as activated carbon, colorants, and other possible additives that further aid in filtration. The increased surface area can enhance filtration properties by post charging of the media through conventional electret charging equipment.

As an alternative mechanism, it is likely that cleaning the surface removes oily residues from the surface of the microfibers allowing better filtration by exposing the surface to the particles to be filtered.

The process may also increase the amount of additives from the interior at the surface of these microfibers. Additionally or alternatively, the instant invention allows more surface area exposed per weight than does previously disclosed methods, all of which improves the filtration process.

Irrespective of the mechanism, the net result of the instant invention is that there is an increased surface area of the fibers available for filtration allowing more "sights" or area for particle entrapment, thus, leading to a more effective filter.

The instant invention also does not require the higher ratio of additives of previous methods yet it is still effective at filtering the desired particles, Thus, the instant method has decreased costs. Further, the higher ratio of additives used in the prior art experienced problems associated with fiber processing that could not be overcome by machine adjustments. Because the instant method does not require a higher ratio of additives it does not suffer from the problems encountered in fiber processing.

Further, currently available equipment to make meltblown fibers have physical limitations that prevent the manufacture of fibers that are consistently less than 1 micron in size. Because the instant method provides a microfiber that has improved filtration ability, there is less reliance on manufacturing fibers that are all uniformly small in size.

Accordingly, the instant invention has a method of making fibrous filter media comprising a web of thermoplastic fibers. It should be understood that these thermoplastic fibers can be made of any known thermoplastic material, however preferred materials include polyolefins, polyesters, polycarbonates, polyimides, and polyamides, or mixtures of any of these materials. Although all of the above materials can be used, preferred materials include polyesters and polyolefms, such as poly(butylene-terephthalate) and polypropylene. Additionally, thermoplastic copolymers also can be used with the preferred copolymers being combinations of any of the above mentioned materials.

By a web with "enhanced particulate filtration properties" it is meant that the web of the instant invention filters better than a web that is not treated by the gaseous plasma at atmospheric conditions of the instant invention. Generally, the web of the instant invention has an ability to filter that is at least 1 ½ times superior to that of the untreated web, preferably at least 2 times superior to that of the untreated web, more preferably at least 3 times superior to that of the untreated web, more preferably at least 4 times superior to that of the untreated web, and most preferably at least 5 times superior to that of the untreated web. In particular, the instant invention shows the above mentioned "enhanced particulate filtration properties" regarding being able to filter any of a number of particles such as dust, fungi, antigens, molds, other small particles, etc. or any of a number of chemical compounds such as any of a number of salts, (for example, NaCl).

In particular, the instant invention relates to a method of making fibrous filter media comprising a web of thermoplastic fibers, wherein said thermoplastic fibers have been surface modified with a gaseous plasma at atmospheric conditions. By atmospheric conditions, it is meant that no vacuum pumps or other devices that produce reduced pressure are needed in the plasma treatment.

The instant invention is directed to a method of generating a fibrous filter media with enhanced particulate filtration efficiency wherein said method comprises treating a web of thermoplastic fibers with a gaseous plasma at atmospheric conditions. The gaseous plasma treatment is done under atmospheric conditions that are adapted for surface modifying the thermoplastic fibers.

In the method of generating the fibrous filter media, the following conditions can be used before during or after plasma treatment.

After or before gaseous plasma treatment, the thermoplastic fibers can be electrostatically charged. Electrostatic charging of the thermoplastic fibers can be performed by any means that is known in the art with a corona discharge method being particularly preferred.

In one embodiment of the invention, the gaseous plasma treatment increases the surface area of the thermoplastic fibers relative to the case where the same or similar thermoplastic fibers do not undergo gaseous plasma treatment.

Means of employing a gaseous plasma treatment on the thermoplastic fibers according to the invention includes inert gas treatment combined with air, with gas combinations being He/air, Ar/air, Ne/air, Xe/air, N₂/air, Kr/air, or any combination/mixture of these gas combinations, with the more preferred combination being Ar/air and/or He/air.

Any of the above gas combinations can be combined with a treatment with fluorine-containing plasmas to produce fibers that are electrostatically charged to generate fibers that possess improved charge stability.

In one embodiment of the instant invention, the web is a fibrous layer of melt extruded fibers or filaments. Alternatively, the web can be comprised of carded, airlaid, or wetlaid staple fibers or any combination of these or any combination that also includes melt extruded fibers. In a preferred embodiment meltblown fibers are used.

In another embodiment of the invention, a gradient of a fibrous filter media can be applied wherein fibers that are upstream are treated by a different method than fibers that are downstream, thus generating a fibrous filter media that possesses a gradient of filtering ability. It will be evident to those of skill in the art that the upstream fibers can possess either superior or inferior filtration ability to those fibers that are downstream. Any of the above-described processes can be added or omitted to this fibrous filter media to generate the aforementioned gradient.

### EXAMPLES

Tables 1-6 illustrate the NaCl penetration of both plasma treated and control fibrous filter media.

| **Test Data For Treated And Control Heat Tested In Oven At 150^{F}** | | | | |
|---|---|---|---|---|
| | | | | |
| | **Control** | | **Plasma Treated** | |
| | **NaCl Penetration @** | **NaCl Resistance @** | | |
| | **32LPM** | **32LPM** | **NaCl Penetration @ 32LPM** | **NaCl Resistance @ 32LPM** |
| 1 | 9.55 | 2.0 | 1.25 | 4.4 |
| 1A | 10.2 | 2.0 | 1.63 | 4.2 |
| 2 | 12.8 | 1.8 | 3.36 | 3.2 |
| 2A | 11.1 | 1.9 | 2.42 | 3.7 |
| 3 | 10.4 | 1.8 | 4.87 | 2.8 |
| 3A | 14.4 | 1.7 | 9.57 | 2.8 |
| 4 | 32.8 | 2.2 | 1.76 | 3.9 |
| 4A | 10.8 | 2.0 | 2.46 | 3.4 |
| Average | 14.01 | 1.9 | 3.42 | 3.6 |
| % | | | | |
| Efficiency | 86 | | 96.6 | |

| | **Retested after 14 hours in oven at 150^{F}** | | | |
|---|---|---|---|---|
| | **Control** | | **Plasma Treated** | |
| | **NaCl Penetration @** | **NaCl Resistance @** | | |
| | **32LPM** | **32LPM** | **NaCl Penetration @ 32LPM** | **NaCl Resistance @ 32LPM** |
| 1 | 27.8 | 1.9 | 6.91 | 3.7 |
| 1A | 28.3 | 1.9 | 7.63 | 3.4 |
| 2 | 28.2 | 1.8 | 11.6 | 2.7 |
| 2A | 28.3 | 1.9 | 9.14 | 3.1 |
| 3 | 22.5 | 1.8 | 11.5 | 2.4 |
| 3A | 27.6 | 1.7 | 16.6 | 2.4 |
| 4 | 40.5 | 2.1 | 9.33 | 3.2 |
| 4A. | 24.9 | 1.9 | 11.7 | 2.7 |
| Average | 28.5 | 1.9 | 10.6 | 3.0 |
| % | | | | |
| Efficiency | 71.5 | | 89.4 | |

| | **Retested after 4 days and 14 hours in oven at 150^{F}** | | | |
|---|---|---|---|---|
| | **Control** | | **Plasma Treated** | |
| | **NaCl Penetration @** | **NaCl Resistance @** | | |
| | **32LPM** | **32LPM** | **NaCl Penetration @ 32LPM** | **NaCl Resistance @ 32LPM** |
| 1 | 32.8 | 1.9 | 8.84 | 3.6 |
| 1A | 31.6 | 1.8 | 9.95 | 3.4 |
| 2 | 32.5 | 1.8 | 13.7 | 2.7 |
| 2A | 31.5 | 1.9 | 10.7 | 3.1 |
| 3 | 25.6 | 1.8 | 13.2 | 2.3 |
| 3A | 30.0 | 1.6 | 16.5 | 2.3 |
| 4 | 40.5 | 2.1 | 11.5 | 3.1 |
| 4A | 26.7 | 1.9 | 14.8 | 2.7 |
| Average | 31.4 | 1.9 | 12.4 | 2.9 |
| % | | | | |
| Efficiency | 68.6 | | 87.6 | |

### Tables 1-6

It will be understood by those of skill in the art that the scope of the instant invention includes any combination of the features disclosed in this invention.

## Claims

1. Method of making a filter media comprising a web of thermoplastic fibers, wherein said thermoplastic fibers are surface modified to improve filtration by treatment with a gaseous plasma at atmospheric pressure, **characterized in that** the gaseous plasma consists of a combination of air and at least one gas selected from the group consisting of He, Ar, Ne, Xe, N₂, Kr and combinations of the gases of this group.

2. Method according to claim 1, wherein the thermoplastic fibers are electrostatically charged.

3. Method according to claim 2, wherein the electrostatically charged thermoplastic fibers are electrostatically charged by a corona discharge method.

4. Method according to one or more of claims 1-3, wherein said gaseous plasma is a He/air mixture.

5. Method according to one or more of claims 1-3, wherein said gaseous plasma is an Ar/air mixture.

6. Method according to one or more of claims 1-3, wherein said thermoplastic fibers are made from one or more of the members selected from the group consisting of polyolefins, polyesters, polycarbonates, polyimides, and polyamides.

7. Method according to one or more of claims 1-3, wherein the web is a fibrous layer of melt extruded fibers or filaments.

8. Method according to one or more of claims 1-3, wherein the web is comprised of carded, airlaid, or wetlaid staple fibers.

9. Method according to one or more of claims 1-3, wherein the web is constructed using a fibrous layer of melt extruded fibers or filaments and any one or more of carded, airlaid, or wetlaid staple fibers.

## Patentansprüche

1. Verfahren zur Herstellung eines Filtermediums, umfassend ein Gewebe aus thermoplastischen Fasern, wobei die thermoplastischen Fasern für eine verbesserte Filtration oberflächenmodifiziert sind, mittels Behandlung mit einem gasförmigen Plasma bei Atmosphärendruck, **dadurch gekennzeichnet, dass** das gasförmige Plasma aus einer Kombination von Luft und mindestens einem Gas besteht, ausgewählt aus der Gruppe, bestehend aus He, Ar, Ne, Xe, N₂, Kr und Kombinationen der Gase aus der Gruppe.

2. Verfahren gemäß Anspruch 1, wobei die thermoplastischen Fasern elektrostatisch geladen sind.

3. Verfahren gemäß Anspruch 2, wobei die elektrostatisch geladenen thermoplastischen Fasern mittels einer Koronaentladung elektrostatisch geladen sind.

4. Verfahren gemäß einem oder mehreren der Ansprüche 1 - 3, wobei das gasförmige Plasma ein He/Luftgemisch ist.

5. Verfahren gemäß einem oder mehreren der Ansprüche 1 - 3, wobei das gasförmige Plasma ein Ar/Luftgemisch ist.

6. Verfahren gemäß einem oder mehreren der Ansprüche 1 - 3, wobei die thermoplastischen Fasern aus einem oder mehreren der Elemente hergestellt sind, ausgewählt aus der Gruppe, bestehend aus Polyolefine, Polyester, Polycarbonate, Polyimide und Polyamide.

7. Verfahren gemäß einem oder mehreren der Ansprüche 1 - 3, wobei das Gewebe eine faserförmige Schicht aus geschmolzenen extrudierten Fasern oder Fäden ist.

8. Verfahren gemäß einem oder mehreren der Ansprüche 1 - 3, wobei das Gewebe kardierte, in Luft oder Flüssigkeit entlassene Spinnfasern umfasst.

9. Verfahren gemäß einem oder mehreren der Ansprüche 1 - 3, wobei das Gewebe gebildet wird unter Verwendung einer faserförmigen Schicht aus geschmolzenen, extrudierten Fasern oder Fäden und einem oder mehreren von kardierten in Luft oder Flüssigkeit entlassenen Spinnfasern.

## Revendications

1. Procédé de fabrication d'un milieu de filtration comprenant une nappe de fibres thermoplastiques, dans lequel lesdites fibres thermoplastiques sont modifiées en surface pour améliorer la filtration par traitement avec un plasma gazeux à pression atmosphérique, **caractérisé en ce que** le plasma gazeux consiste en une combinaison d'air et d'au moins un gaz choisi parmi le groupe consistant en He, Ar, Ne, Xe, N₂, Kr et des combinaisons des gaz de ce groupe.

2. Procédé selon la revendication 1, dans lequel les fibres thermoplastiques sont chargées électrostatiquement.

3. Procédé selon la revendication 2, dans lequel les fibres thermoplastiques chargées électrostatiquement sont chargées électrostatiquement par un procédé de décharge corona.

4. Procédé selon l'une ou plusieurs des revendications 1 à 3, dans lequel ledit plasma gazeux est un mélange He/air.

5. Procédé selon l'une ou plusieurs des revendications 1 à 3, dans lequel ledit plasma gazeux est un mélange Ar/air.

6. Procédé selon l'une ou plusieurs des revendications 1 à 3, dans lequel lesdites fibres thermoplastiques sont faites d'un ou de plusieurs des éléments choisis parmi le groupe consistant en polyoléfines, polyesters, polycarbonates, polyimides, et polyamides.

7. Procédé selon l'une ou plusieurs des revendications 1 à 3, dans lequel la nappe est une couche fibreuse de fibres ou de filaments extrudés à l'état fondu.

8. Procédé selon l'une ou plusieurs des revendications 1 à 3, dans lequel la nappe comprend des fibres discontinues cardées, obtenues par jet d'air, ou par voie humide.

9. Procédé selon l'une ou plusieurs des revendications 1 à 3, dans lequel la nappe est construite en utilisant une couche fibreuse de fibres ou de filaments extrudés à l'état fondu et l'une quelconque ou plusieurs fibres discontinues cardées, obtenues par jet d'air, ou par voie humide.
